# EUROPEAN PATENT APPLICATION

(11) **EP 1 208 887 A2**
(43) Date of publication of application: **29.05.2002**
(21) Application number: 01308955.2
(22) Date of filing: 22.10.2001
(51) Int. Cl.: A63F 13/10

(54) **Object control method**

(30) Priority: 22.11.2000 JP 2000356643; 13.07.2001 JP 2001213405
(71) Applicant: Sony Computer Entertainment Inc., Tokyo 107-0052 (JP)
(72) Inventor: Takeda, Yasushi, Meguro-ku, Tokyo 152-0033 (JP); Henmi, Noriyuki c/o Sony Computer Entertainment, Minato-ku Tokyo 107-0052 (JP)
(74) Representative: Horner, David Richard

(57) **Abstract**

In the disclosed invention, a second object symbolizing the shadow of a first object in a virtual space, the shape, motion, and the like of the second object can be controlled independently of the first object, and the first and second objects are set to be personalized virtual characters in a 3D virtual space of a video game, so that a video game or the like having unexpectedness which is supposed to be impossible in a conventional expressing method of a 3D graphic animation, joyfulness, and wide game properties (good entertainment properties).

## Description

### BACKGROUND OF THE INVENTION

### 1. Field of the Invention

The present invention relates to an object control method, an object control process program to be executed by a computer, a recording medium on which an object control process program to be executed by a computer is recorded and a program execution device.

### 2. Description of the Related Art

In recent years, entertainment devices such as video game machines have spread. In the entertainment device, a game application program which is obtained through various recording medium such as a CD-ROM or a DVD-ROM, or communication media such as a communication line or a network is executed, so that a player can enjoy various games.

In particular, a game application program such as an RPG (roll playing game), an AVG (adventure game), or an SLG (simulation game) is designed such that, according to an instructive input made by a player and accepted through a controller connected to the entertainment device, the story is advanced, or the action, motion, physical condition and the like of a virtual character in the game is changed.

In a video game in recent years, since an image is formed by a 3D (three-dimensional) graphic animation, the image is close to reality (have reality).

In addition to the 3D graphic animation, as a method for improving the reality, the following conventional method is used. That is, a region in which the shadow of the virtual character falls is calculated on the basis of the positional relationship between a virtual light source and the virtual character in the game, and the shadow formed by the virtual character is reflected on such as a ground or a thing around the virtual character. As a method of displaying a reflected shadow, for example, a shadow volume method (Shadow Volume method), a modifier volume method (Modifier Volume method), or the like is known.

Recently, a video game which can realize not only a realistic video image in which the shadow of a virtual character is reflected as descried above, but also unexpectedness which is supposed to be impossible in a conventional expressing method of a 3D graphic animation, joyfulness, and wide game properties (good entertainment properties) is strongly demanded.

### SUMMARY OF THE INVENTION

Embodiments of the present invention seek to provide an object control method, an object control process program to be executed by a computer, a recording medium on which an object control process program to be executed by a computer is recorded, and a program execution device, which are suitable for such as a video game machine and all of which can realize a video game having unexpectedness which is supposed to be impossible in a conventional expressing method of a 3D graphic animation, joyfulness, and wide game properties (good entertainment properties).

According to one aspect of the present invention, there is provided a method in which a second object symbolizing a shadow of a first object in a virtual space is generated, and the second object is controlled independently of the first object.

In embodiments of the present invention when a third object is added to the first object, a fourth object having a shape similar to the shape of the third object and being difficult to the third object is added to the second object to change the shape of the second object.

In embodiments of the present invention, a parameter related to the second object is changed depending on a parameter related to the first object.

The first and second objects may be virtual personalized characters in, for example, a three-dimensional virtual space.

More specifically, in embodiments of the present invention, although the second object always exists near the first object because the second object is an object symbolizing the shadow of the first object, the second object can be independently changed in movement or shape because the second object is not the shadow of the first object itself.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF DRAWINGS

The present invention will be described further, by way of example only, with reference to preferred embodiments thereof as illustrated in the accompanying drawings, in which:
FIG. 1 is a diagram showing a schematic configuration of a main part of an entertainment system according to an embodiment of the present invention.
FIG. 2 is a block diagram showing an internal schematic configuration of an entertainment device according to the embodiment of the present invention.
FIG. 3 is a diagram for explaining a data configuration in a game application program according to the embodiment of the present invention.
FIG. 4 is a flow chart showing the entire flow of drawing processes of a hero and a shadow character in the game application program according to the embodiment of the present invention.
FIG. 5 is a sketch of an example of the hero and a shadow character drawn behind the hero.
FIG. 6 is a flow chart showing the flow of control for determining a drawing position when the shadow character is drawn.
FIG. 7 is a flow chart showing the flow of display of a problem (question) and alternatives thereof and control performed when a motion and a reaction of the shadow character are changed depending on the selection result.
FIG. 8 is a diagram showing an example of a first problem and alternatives displayed in a problem and alternative display region on a screen.
FIG. 9 is a diagram showing an example of a problem and alternatives subsequent to the problem and alternatives thereof in FIG. 8.
FIG. 10 is a diagram showing an example of a problem and alternatives subsequent to the problem and alternatives thereof in FIG. 9.
FIG. 11 is a diagram showing an example of a reaction of the shadow character depending on a selection result (incorrect state) of the problems and the alternatives in FIGs. 8 to 11.
FIG. 12 is a diagram showing an example of a reaction of the shadow character depending on a selection result (correct state) of the problems and the alternatives in FIGs. 8 to 10.
FIG. 13 is a sketch showing a display of the shadow character depending on an item which the hero equips.
FIG. 14 is a flow chart showing the flow of display of the shadow character depending on the item which the hero equips and event occurrence.
FIG. 15 is a sketch showing a display of the shadow character the parameter of which is changed depending on a parameter of the hero.
FIG. 16 is a flow chart showing the flow of a parameter change process of the shadow character depending on the parameter of the hero.

### DETAILED DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the described of the same or similar parts and elements will be omitted or simplified.

### Entertainment System for Realizing Video Game of Embodiment

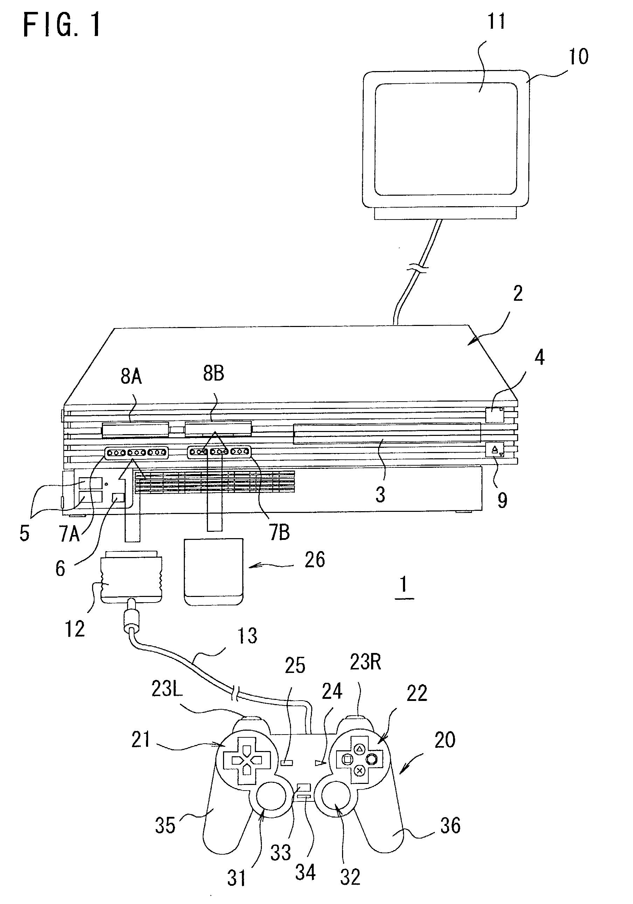

An entertainment system 1 according to the embodiment shown in FIG. 1 is a video game system constituted by an entertainment device 2 serving as an example of a program execution device of an embodiment of the present invention for executing a video game (to be described later) according to the embodiment and reproducing a movie and the like, a controller 20 connected to the entertainment device 2 and serving as an operation terminal operated by a user (player), and a television monitor device 10 for displaying game contents, a movie, or the like and outputting sound.

The entertainment device 2 is provided with memory card slots 8A and 8B allowing a memory card 26 to be inserted therein and ejected therefrom, controller ports 7A and 7B allowing a connector 12 of a cable 13 of the controller 20 to be attached thereto or detached therefrom, a disk tray 3 on which an optical disk such as a DVD-ROM or a CD-ROM is loaded, an open/close button 9 for opening/closing the disk tray 3, an on/standby/reset button 4 for setting an ON, standby, or reset state of a power supply, an IEEE (Institute of Electrical and Electronics Engineers) 1394 connection terminal 6, a USB (Universal Serial Bus) connection terminal 5, and the like. Although not shown, on the rear surface side of the entertainment device 2, a power supply switch, an audio/video output terminal (AV multiple output terminal), a PC card slot, an optical digital output terminal, an AC power supply input terminal, and the like are provided.

The entertainment device 2 executes a game according to a game application program read from the optical disk such as a CD-ROM or a DVD-ROM, a semiconductor memory, or the like, a game application program downloaded through various communication lines such as a telephone line, a LAN, a CATV line, and a communication satellite line, and an instruction input from a player through the controller 20. The execution of the game is that the game progresses such that a video image (game video image) in a game screen displayed on a screen 11 of the television monitor device 10 connected to the entertainment device 2 or voice (game voice) of an audio device are controlled according to an instruction input by the player through the controller 20. In the entertainment device 2 shown in FIG. 1, two controllers 20 can be connected to the controller ports 7A and 7B, respectively. Using the two controllers 20 enables two players to perform various games. In the memory card 26 loaded on the memory card slot 8A or 8B, various game data generated by execution of, for example, a video game are stored (saved). In this manner, in the game performed afterward, the continuance or the like of the game can be performed by using the saved game data.

Further, the entertainment device 2 not only executes a video game on the basis of the game application program, but also can reproduce (decode) audio data recorded on, for example, a CD or video and audio data of a movie or the like recorded on a DVD, and can be operated on the basis of other various application programs. In the entertainment device 2 according to the embodiment, when a DVD is reproduced, a DVD driver memory card in which a driver program for reproducing a DVD is stored is attached to the memory card slot 8A or 8B.

The controller 20 has a left grip section 35 which is gripped by an operator (player) of the controller 20 such that the left grip section 35 is folded in the left palm of the player, a right grip section 36 which is gripped by the player such that the right grip section 36 is folded in the right palm of the player, a left operation section 21 and a right operation section 22 which are operated by the thumbs of the left and right hands while the grip sections 35 and 36 being gripped by left and right hands, a left analog operation section 31 and a right analog operation section 32 which are possible to perform analog operation (joystick operation) as well as by the thumbs of the left and right hands, a first left depression button 23L and a first right depression button 23R which are depressed by the left and right first fingers, and a second left depression button and a second right depression button (not shown) which are arranged below the first left and right depression button 23L and 23R and which are depressed by the left and right second fingers.

On the left operation section 21, for example, "up", "down", "left", and "right" direction keys used when the player performs an operation for moving, for example, a game character up, down, left, right, and the like on a screen are arranged. The "up", "down", "left, and "right" direction keys can perform not only the up, down, left, and right direction instructions, but also oblique direction instructions. For example, when the "up" direction key and the "right" direction key are simultaneously operated by depressing the keys, a direction instruction of the obliquely up right direction can be given. With respect to the other direction keys, similarly, when the "down" direction key and the "left" direction key are similarly operated by depressing the keys, a direction instruction of the obliquely down left direction can be given.

On the right operation section 22, four instruction buttons ("Δ", "□", "×", and "○" buttons on which the marks having the shapes of "Δ", "□", "×", and "○" are printed) to which different functions such as setting and execution of a function of a game character are allocated by a game application program are arranged. For example, the function of a display designation of a menu or display and the function (shadow button function) of motion start instructions of a shadow character of a hero in the game application program of this embodiment (to be described later) are allocated to the "Δ" button, the function for designating cancel or the like of, for example, a selected item is allocated to the "X" button, the function for designating determination or the like of, for example, a selected item is allocated to the "○" button, and the function for designating display/no display of an index or the like is allocated to the "□" button.

When the left analog operation section 31 and the right analog operation section 32 are held elect (not inclined) in a non-inclination operation state, the positions of the left analog operation section 31 and the right analog operation section 32 are referred to as home position (referencepositions). In an inclination operation state, coordinate values on an X-Y coordinate depending on an inclination amount and an inclination direction with respect to the reference position is detected, and the coordinate values are sent to the entertainment device 2 as an operation output.

In addition, the controller 20 further comprises a mode selection switch 33 for selecting operation modes for operating (analog operation mode) or stopping (digital operation mode) the functions of the left and right operation sections 21 and 22 and the left and right analog operation sections 31 and 32, a light display section 34 for allowing a player to recognize a selected operation mode by displaying an illumination such as an LED (light-emitting diode), a start button 24 for instructing the entertainment device to perform the start of the game, the start of reproduction and temporary stop, a select button 25 for instructing the entertainment device to display a menu and an operation panel on the monitor screen 11, and the like. When the analog operation mode is selected by the mode selection switch 33, the light display section 34 is controlled to be lighted, and the left and right analog operation sections 31 and 32 are set in active states. When the digital operation mode is selected, the light display section 34 is controlled to be eliminated, and the left and right analog operation sections 31 and 32 are set in inactive states.

When the various buttons and the operation sections arranged on the controller 20 are operated, the controller 20 generates operation signals corresponding to the operation, and transmits the operation signals to the entertainment device 2 through the cable 13.

In the controller 20, a vibration generation mechanism for generating vibration by rotating weights which are eccentric to the rotation shafts of motors by the motors is arranged in the left and right grip sections 35 and 36. The vibration generation mechanism can be operated depending on an instruction from the entertainment device 2. More specifically, the controller 20 has a function of transmitting the vibration to the hands of the player by operating the vibration generation mechanism.

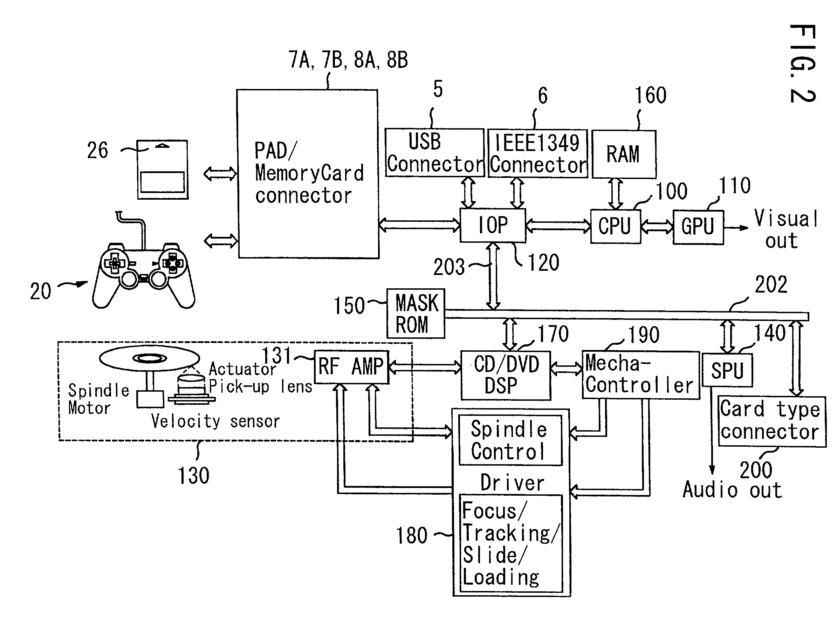

The outline of the internal circuit configuration of the entertainment device 2 according to the embodiment will be described below with reference to FIG. 2.

The entertainment device 2 according to this embodiment comprises, as basic configurations, a main CPU 100 for performing signal processing and control of internal constituent elements on the basis of various programs of a game application program or the like according to the embodiment (to be described later), a graphic processor (GP) 110 for performing image processing, an IO processor (IOP) 120 for performing interface processing between the outside and the inside of the device, an optical disk control section 130 for performing reproducing control of an optical disk such as the DVD or the CD on which the application program or multimedia data is recorded, a main memory 160 including the function of a buffer for temporarily storing data read from a work area of the main CPU 100 and the optical disk, a MASK-ROM 150 in which an operating system program executed by the main CPU 100 or the IO processor 120 is stored, and a sound processor unit (SPU) 140 for performing audio signal processing.

The entertainment device 2 comprises a CD/DVD digital signal processor (DSP) 170 for reproducing data obtained by performing some processes to a reproduced output from a CD or a DVD supplied through an RF amplifier 131 of the optical disk control section 130, wherein the processes performed by a CD or a DVD digital signal processor (DSP) 170 are, for example, an error correction process and an expansion decoding process to an compassion coding data. Further, the entertainment device comprises a driver 180 and a mechanical controller 190 for performing rotational control of a spindle motor of the optical disk control section 130, focus/tracking control of an optical pickup and loading control of a disk tray, and a card type connector (PC card slot) 200 to which, for example, a communication card, an external hard disk drive, or the like is connected.

These sections are connected to each other through bus lines 202 and 203 or the like. The main CPU 100 and the graphic processor 110 are connected to each other through a dedicated bus, and the main CPU 100 and the IO processor 120 are connected to each other through an SBUS. The IO processor 120, the CD/DVD digital signal processor 170, the MASK-ROM 150, the sound processor unit 140, the card type connector 200 are connected to each other through an SSBUS.

The main CPU 100 executes the operating system program, stored in the MASK-ROM 150, for the main CPU to control the entire operation of the device 2. The main CPU 100 executes various application programs or the like including the game application program according to the embodiment read from the optical disk such as a CD-ROM or a DVD-ROM, loaded on the main memory 160, or downloaded through a communication network to control the operation of the game or the like in the entertainment device 2.

The IO processor 120 executes an operating system program for an IP processor stored in the MASK-ROM 150 to input/output a signal from the controller 20 depending on an operation of the player and data from the memory card 26 in which a setting or the like of the game is stored. In addition, the IO processor 120 controls input/output operations of the USB connector (not shown), the IEEE 1394 connector, the PC card slot, or the like and performs conversion or the like of a data protocol. The MASK-ROM 150 can also store the device IDs of the controller 20 connected to the controller ports 7A and 7B, the memory card 26 connected to the memory card slots 8A and 8B, a PC card connected to the card-type connector (PC card slot) 200, and the like. The IO processor 120 communicates with the devices such as the controller 20 and the memory card on the basis of these device IDs.

The graphic processor 110 stores drawing according to a drawing instruction from the main CPU 100 and stores the drawn image in a frame buffer (not shown) . The graphic processor 110 has the same function as that of a geometric transfer engine for performing a process such as coordinate transformation. In other words, the graphic processor 110, serving as the geometric transfer engine, constitutes a virtual three-dimensional object by groups of triangular polygons when an application program such as a game recorded on, for example, an optical disk uses so-called three-dimensional (3D) graphics. The graphic processor 110 performs various calculations for generating an image obtained by photographing the three-dimensional object by a virtual camera, i.e., transparent transformation when rendering is performed (calculations of coordinate values when the vertexes of respective polygons constituting the three-dimensional object are projected on a virtual camera screen. The graphic processor 110 performs rendering of the three-dimensional object to the frame buffer according to a drawing instruction from the main CPU 100 while using the geometric transfer engine as needed to form an image. The graphic processor 110 outputs a video signal corresponding to the formed image.

The sound processor unit 140 comprises an ADPCM decoding function for reproducing audio data subjected to adaptive predictive coding, a reproducing function for reproducing an audio signal such as sound effects by reproducing waveform data stored in a sound buffer to output the audio signal, a modulation function for modulating and reproducing the waveform data stored in the sound buffer, and the like. Since the sound processor unit 140 comprises these functions, the sound processor unit 140 is designed to be used as a so-called sampling sound source which generates an audio signal such as music or sound effects from the waveform data stored in the sound buffer on the basis of an instruction from the main CPU 100.

In the entertainment device 2 having the above configuration, when a power supply is turned on, the operating system program for the main CPU and the operating system program for the I0 processor are read from the MASK-ROM 150, and the operating system programs corresponding to the main CPU 100 and the IO processor 120 are executed by the main CPU 100 and the IO processor 120, respectively. In this manner, the main CPU 100 integrally controls the respective sections of the entertainment device 2. The IO processor 120 controls inputting/outputting a signal between the IO processor 120 and the controller 20 or the memory card26. When the main CPU 100 executes the operating system program, the main CPU 100 performs an initializing process such as an operation check, controls the optical disk control section 130, reads the application program such as a game recorded on the optical disk, loads the application program on the main memory 160, and executes the game application program. When the game application program is executed, the main CPU 100 controls the graphic processor 110 and the sound processor unit 140 according to an instruction of a player received from the controller 20 through the IO processor 120 and controls display of an image and generation of sound effects and music. In the entertainment device 2 of this embodiment, the same operation as described above is performed when, for example, a movie recorded on an optical disk is reproduced. The main CPU 100 controls the graphic processor 110 and the sound processor unit 140 according to an instruction (command) from the player received from the controller 20 through the IO processor 120 and control of display of video images of the movie reproduced from the optical disk and generation of sound effects or music or the like.

### Video Game of Embodiment

In a conventional video game, the shadow of a virtual character appearing in this game is generated by calculation performed on the basis of the positional relationship between a virtual light source and the virtual character, and is displayed to give reality to the game screen. For this reason, the shape and the motion of the shadow, like a real shadow, is determined by the shape and the motion of the virtual character or the like which cuts light from the light source. Therefore, when the light source, the shape and the motion of the virtual character, the environment, or the like do not change, the shadow does not change as a matter of course. Like a real shadow, the virtual shadow does not move independently of the virtual character and the light source. The virtual shadow itself does not have independent intent.

In contrast to this, in the video game according to an embodiment to which the present invention is applied, the shadow of a predetermined object (hereinafter, referred to as a hero in the game in this embodiment) is defined as an object (referred to as a shadow character in this embodiment) which can be moved independently of the motion of the hero (predetermined object), so that the shadow character acts independently of the hero or has independent intent. For example, when the shadow character independently variably acts such that the shadow characters helps the hero in the game, the game which has unexpectedness supposed to be impossible in a conventional expressing method of a 3D graphic animation and joyful and wide game properties (entertainment properties) can be realized.

In other words, in a game application program for realizing the video game according to the embodiment of the present invention, unlike a shadow obtained by a conventional shadow display method, the shadow character is not determined by a virtual light source in a game virtual space, a positional relationship between the virtual shadow and a hero, the shape of the hero, a circumferential environment, and the like. The virtual shadow of the embodiment is generated as a character which is not limited to the positional relationship between the shadow and the hero and the motion of the hero and which can independently and self-motivatedly act.

However, since this shadow character persistently exists as the shadow of the hero, the shadow character is generated as a character always existing near the hero in the game application program of this embodiment. It is assumed that the shadow character cannot appear at a position where the shadow of the hero is not generated such as at a position where there is no light source, a position where the hero is not lighted, and a position where the shadow of the hero is hidden by the shadow of other objects or the like.

In the game application program of this embodiment, the following is realized. That is, the shadow character is raised, and the shadow character talks to a hero or another character in the game and fights with the other character or another shadow character. In addition, for example, in a scene in which the hero fights with another character, when the hero is damaged (for example, the level of the hero is lowered), the shadow character can counter attack against an enemy.

In the game application program of this embodiment, an operation in which the shadow character exists as the shadow of the hero can be performed by the shadow character to advantage. For example, the shadow character enters a narrow gap in which the hero cannot enter to explore the inside state of the gap, the shadow is expanded (the body of the shadow character is expanded) to obtain an item which the hero cannot reach, and the shadow character is semi-transparently drawn such that the player can see a state behind the shadow character. In addition, by using the setting in which the shadow character always exists near the hero, an advice such as a so-called help message which can be called at any time can be made.

As described above, according to the game application program of this embodiment, by using the setting in which the shadow character is the shadow of the hero, an associate unit which always exists beside the hero and which cannot be separated from the hero can be naturally included in the game. When the shadow rises, the shadow can also be expressed as a personalized character. In addition, in the game application program of this embodiment, the shadow character has such demerits that the shadow character cannot appear at a position where there is no light so as to make the game complex.

### Rough Configuration of Game Application Program of Embodiment

The configuration of the game application program for realizing a video game according to the above-described embodiment will be described below.

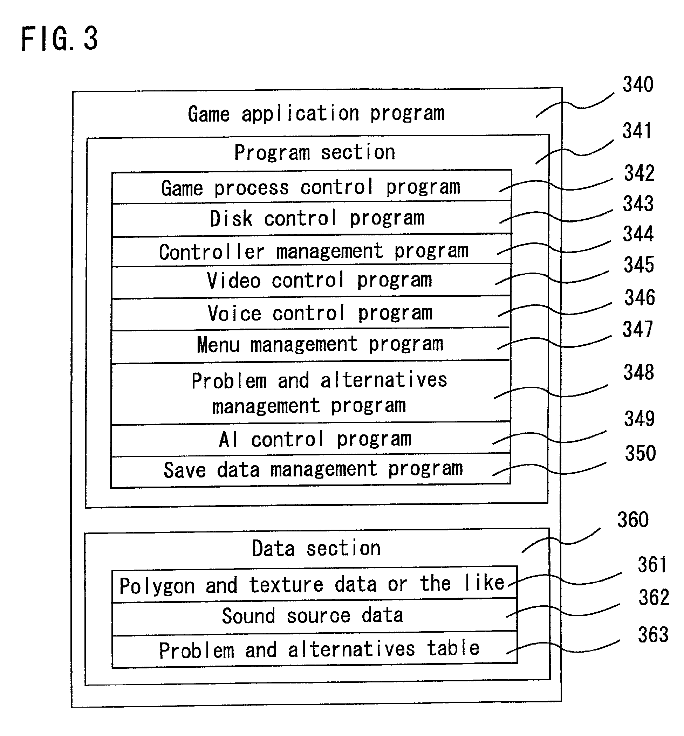

The game application program according to the embodiment is recorded on a recording medium such as an optical disk, for example, a DVD-ROM or a CD-ROM, can be downloaded through a communication line, and has a data configuration shown in FIG. 3. The data configuration as shown in FIG. 3 conceptually represents only main parts of a program section and other data sections included in the game application program of the embodiment in which the shadow of the hero in, for example, the game is set as a shadow character which can move independently of the motion of the hero to make it possible to self-motivatedly perform various actions of the shadow character. FIG. 3 does not show an actual program configuration.

As shown in FIG. 3, a game application program 340 according to the embodiment roughly comprises a program section 341 for executing the video game of the embodiment by the main CPU 100 in FIG. 2 and various data sections 360 used when the video game of the embodiment is executed.

The data sections 360 has, various data used when the video game of this embodiment is executed, at least polygon and texture data or the like 361, the sound source data 362, a problem and alternatives table 363, and the like.

The polygon and texture data or the like 361 are data for generating polygons and texture when a game image including the hero or the shadow character or the like are generated. The sound source data 362 is waveform data used when game voice, music, sound effects, and the like in the sound processor unit 140 are generated. The problem and alternatives table 363 is table information of a problem (question) (to be described later) and alternative data used in the problem which are displayed in the video game of the embodiment.

The program section 341 include, as a program for executing the video game of the embodiment, at least, a game progress control program 342, a disk control program 343, a controller management program 344, a video control program 345, a voice control program 346, a menu management program 347, a problem and alternatives management program 348, an AI control program 349, a save data management program 350, and the like.

The game progress control program 342 is a program for control of the progress of the video game of the embodiment. The disk control program 343 is a program for controlling data read out or the like from the optical disk according to the start and progress of the video game, and the controller management program 344 is a program for managing an input signal from the controller 20. The video control program 345 is a program for generating game video image and displaying the game video image on the monitor screen 11, and the voice control program 346 is a program for generating and outputting game voice. The menu management program 347 is a program for displaying a menu screen displayed on the monitor screen 11 upon starting and completion of the game and in the process of the game, and managing information for menu selecting instruction, and the problem and alternatives management program 348 is a program for managing the problem, the alternatives, and the like (to be described later) displayed in the video game of the embodiment. The problem and alternatives management program 348 may be included in the menu management program 347. The AI (Artificial Intelligence) control program 349 is a program to self-motivatedly move the character (in particular, the shadow character) in the video game of the embodiment without being influenced by an instruction of the player and the motion or the like of the hero, and corresponds to an object control program according to an embodiment of the present invention. The save data management program 350 is a program which manages save data such that a game point generated by the video game of the embodiment, data in the progress of the game, and the like are stored in the memory card 26 as save data or the save data stored in the memory card 26 are read out.

### Flow in Execution of Game Application of Embodiment

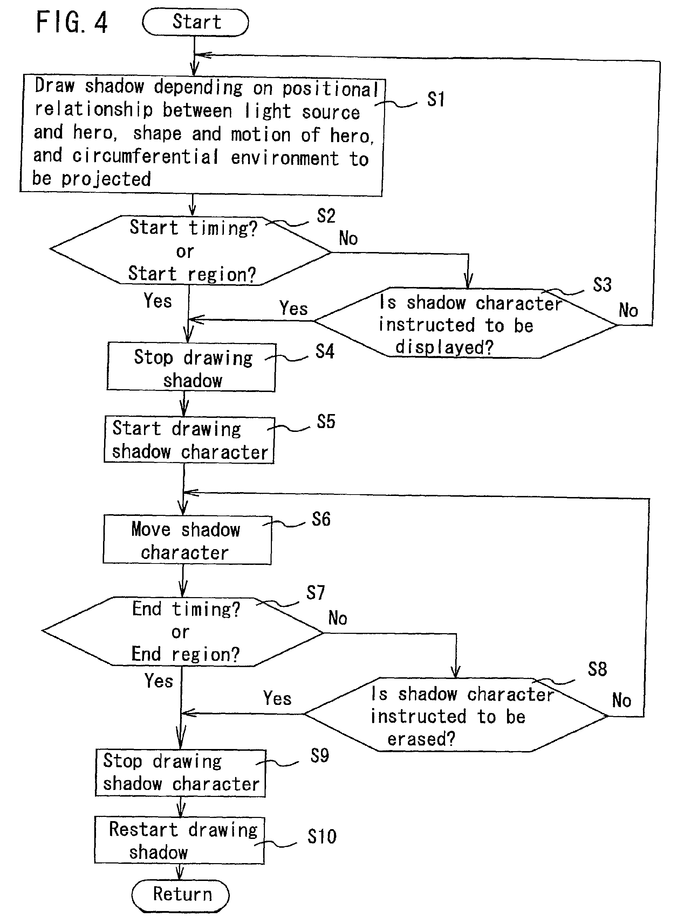

The flow of processes in the game application program of the embodiment shown in FIG. 3, a detailed hero, a shadow character, and the like appearing in the game of the embodiment will be described below with the drawings following FIG. 4. The flows of the flow charts described below are realized such that the program sections constituting the game application program of the embodiment are operated on the CPU incorporated in the entertainment device 2 in FIG. 1. In the following, in particular, only a part related to display and motion of the hero and the shadow character which are characteristic features of the present invention are extracted and described.

In FIG. 4, the entire flows of drawing processes of the hero and the shadow character in the game application program 340 of the embodiment.

In the game application program 340 of the embodiment, in the normal progress of the game, as in the process in step S1, according to the positional relationship between a virtual light source and the hero in the game virtual space, the shape and motion of the hero, a circumferential environment, and the like, the shadow of the hero is drawn by using a conventional shadow reflection display method.

In this state, the game progress control program 342, as the process in step S2, determines whether it is a preset display start timing of the shadow character or not or whether the hero enters a start region in which display of the shadow character is preset or not. In the step S2, when it is determined that it is the display start timing or that the hero enters the start region, the process of the game progress control program 342 shifts to step S4. On the other hand, when it is determined that it is not the display start timing and that the hero does not enter the start region, the process shifts to the process in step S3.

When the process shifts to the process in step S3, the game progress control program 342 determines whether a notice representing that a predetermined button ("Δ" button in the embodiment) of the controller 20 is depressed is obtained from the controller management program 344, i.e., whether an input for instructing the shadow character to be displayed is made such that the player depresses the "Δ" button of the controller 20. When it is determined in step S3 that the shadow character is not instructed to be displayed, the game progress control program 342 returns to step S1. On the other hand, when it is determined that the shadow character is instructed to be displayed, the game progress control program 342 shifts to the process in step S4.

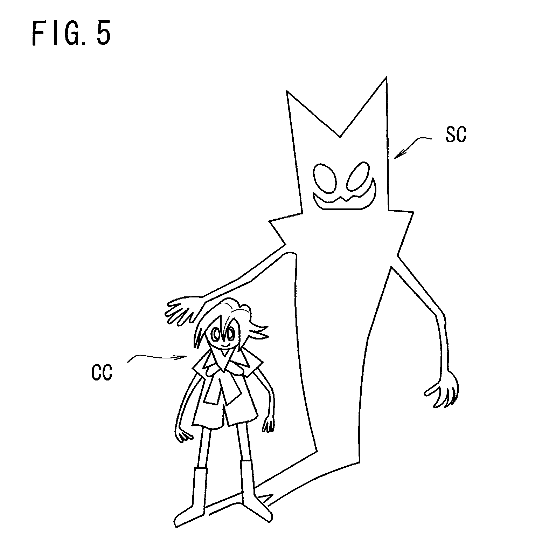

When it is determined in the step S2 that it is the display start timing or that the hero enters the start region, and when the game progress control program 342 shifts to step S4, or when it is determined in step S3 that the shadow character is instructed to be displayed, and when the game progress control program 342 shifts to step S4, the game progress control program 342 stops drawing the shadow of the hero depending on the positional relationship between the virtual light source and the hero in the game virtual space, the shape of the hero, the circumferential environment, and the like through the video control program 345. In addition, as the process in step S5, the game progress control program 342 generate a shadow character SC as shown in FIG. 5 by using polygon and texture data or the like prepared in the data sections 360 to draw the shadow character SC near a hero CC.

However, the hero CC and the shadow character SC shown in FIG. 5 are only examples, and are not limited to FIG. 5. In the example in FIG. 5, the shadow character SC is expressed not to have a thickness on the drawing. However, in fact, when a shadow character SC having a thickness and obtained by adhering, for example, two polygons to each other is drawn, even though a viewpoint is moved to see, for example, the shadow character SC from the side, the shadow character SC is prevented from being eliminated from the screen.

The game progress control program 342 performs a shadow character moving process (to be described later) as the process in step S6, and as the process in step S7, determines whether it is a preset display end timing of the shadow character or not or whether the hero enters a preset end region in which display of the shadow character is ended or not. In the step S7, when it is determined that it is the display end timing or that the hero enters the end region, the process of the game progress control program 342 shifts to step S9. On the other hand, when it is determined that it is not the display end timing and that the hero does not enter the end region, the game progress control program 342 shifts to the process in step S8.

When the game progress control program 342 shifts to the process in step S8, the game progress control program 342 determines whether a notice representing that a predetermined button ("×" button in the embodiment) of the controller 20 is depressed is obtained from the controller management program 344, i.e., whether an input for instructing display of the shadow character to be ended is made such that the player depresses the "×" button of the controller 20. When it is determined in step S8 that the display of the shadow character is not instructed to be ended, the game progress control program 342 returns to step S6. On the other hand, when it is determined that the display of the shadow character is instructed to be ended, the game progress control program 342 shifts to the process in step S9.

When it is determined in the step S7 that it is the display end timing or that the hero enters the end region, and when the game progress control program 342 shifts to step S9, or when it is determined in step S8 that the display of the shadow character is instructed to be ended, and when the game progress control program 342 shifts to step S9, the game progress control program 342 stops drawing the shadow character SC through the video control program 345. As the process in step 310, the drawing of the shadow of the hero depending on the positional relationship between the virtual light source and the hero in the game virtual space, the shape of the hero, the circumferential environment, and the like is restarted.

The example in FIG. 5 shows a state in which the shadow character SC is drawn on the back side of (behind) the hero CC. However, in the game application program of the embodiment, the shadow character SC can be drawn not only on the back side of the hero CC but also on various positions, for example, on the left of the hero CC, on the right of the hero CC, in front of the hero CC, above the hero CC. In particular, in the game application program of the embodiment, the position where the shadow character SC is displayed is determined by checking whether a space in which the shadow character SC can be drawn exists near the hero CC.

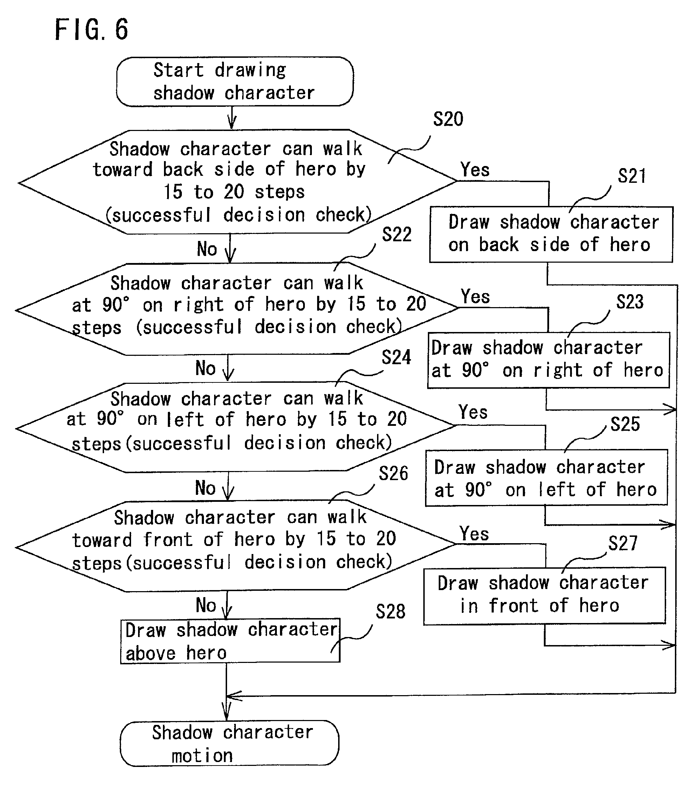

FIG. 6 shows the flow of control for determining a position where the shadow character SC is drawn in step S5 of the flow chart shown in FIG. 4.

In FIG. 6, when the game progress control program 342 starts drawing the shadow character, it is determined in step S20 whether a space in which the shadow character can walk toward the back side of the hero by, for example, 15 to 20 steps in the game space exists or not. In other words, when the space in which the shadow character walks toward the back side of the hero by 15 to 20 steps does not exist, the shadow character collides with the thing or the like around the shadow character when the shadow character is drawn. For this reason, it is determined in step S20 whether the space in which the shadow character can be drawn exists on the back side of the hero or not. In this step 320, when the game progress control program 342 determines that the space in which the shadow character can walk toward the back side of the hero by 15 to 20 steps exists, as the process in step S21, the shadow character is drawn at the position of the back side of the hero through the video control program 345. On the other hand, in step 320, when the game progress control program 342 determines that the space in which the shadow character can walk toward the back side of the hero by 15 to 20 steps does not exist, the process of the game progress control program 342 shifts to step S22.

When the game progress control program 342 shifts to the process in step S22, the game progress control program 342 determines whether a space having, for example, 15 to 20 steps toward the right of the hero at an angle of 90° exists in the game space or not. In this step S22, when it is determined that the space of 15 to 20 steps exists in the right of the hero at the angle of 90°, the game progress control program 342 draws the shadow character at the position on the right of the hero at the angle of 90° through the video control program 345. On the other hand, when it is determined in step S22 that the space of 15 to 20 steps does not exist toward the right of the hero at the angle of 90°, the process of the game progress control program 342 shifts to step S24.

When the game progress control program 342 shifts to the process in step S24, the game progress control program 342 determines whether the space of, for example, 15 to 20 steps exists on the left of the hero at an angle of 90° in the game space or not. When it is determined in step S24 that the space of 15 to 20 steps exists on the right of the hero at the angle of 90°, the game progress control program 342 draws the shadow character at a position on the left of the hero at the angle of 90° as the process in step S25. On the other hand, in step S24, when the space of 15 to 20 steps does not exist at the angle of 90° on the left of the hero, the process of the game progress control program 342 shifts to step S26.

When the game progress control program 342 shifts to the process in step S26, the game progress control program 342 determines whether a space of, for example, 15 to 20 steps exists toward the front surface of the hero in the game space or not. When it is determined in step S26 that the space of 15 to 20 steps exists in front of the hero, the game progress control program 342 draws the shadow character at the position in front of the hero through the video control program 345 as the process in step S27. On the other hand, in step S26, when the space of 15 to 20 steps does not exist toward the front surface of the hero, the process of the game progress control program 342 shifts to step S28.

When the game progress control program 342 shifts to the process in step S28, the game progress control program 342 draws the shadow character above the hero through the video control program 345.

As described above, even though an obstruction exists in any direction of the hero, the shadow character can be drawn to avoid the obstruction. The example in FIG. 6 describes the case in which the shadow character is drawn on the back side of the hero, at an angle of 90° on the right of the hero, at an angle of 90° on the left of the hero, in front of the hero, or above the hero. However, embodiments of the present inventions are not limited to these positions. If there is a sufficient space, the shadow character can be drawn at a position of the space.

In the video game of the embodiment, in addition to the generation and drawing of the shadow character, for example, a problem (question) and alternatives thereof are displayed to make it possible that the motion and reaction of the shadow character are changed depending on a selection result obtained by the player (i.e., the hero).

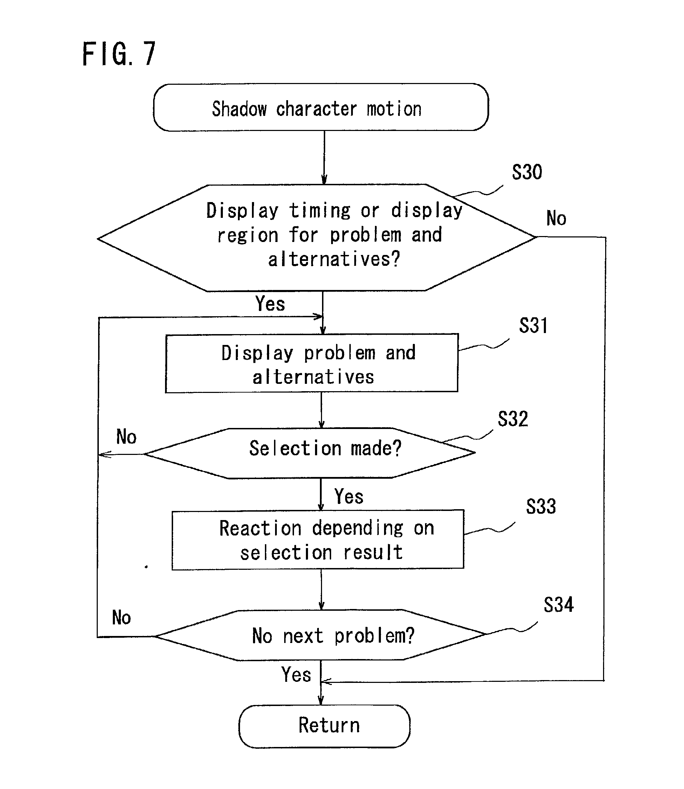

In FIG. 7, a concrete example of the shadow character moving process in step S6 of FIG. 4, the problem (question) and alternatives thereof are displayed. FIG. 7 shows the flow of control when the motion and reaction of the shadow character are changed depending on the selection result.

In FIG. 7, after the shadow character is drawn, as the process in step S30, the game progress control program 342 determines whether it is a preset display timing for a problem and alternatives thereof or not or whether the hero enters a display region in which display of the problem and the alternatives is preset or not. In the step S30, when it is determined that the display timing for the preset problem and alternatives thereof or that the hero enters the display region, the process of the game progress control program 342 shifts to step S31. On the other hand, when it is determined that it is the display timing and that the hero does not enter the display region, the process of the game progress control program 342 is returned.

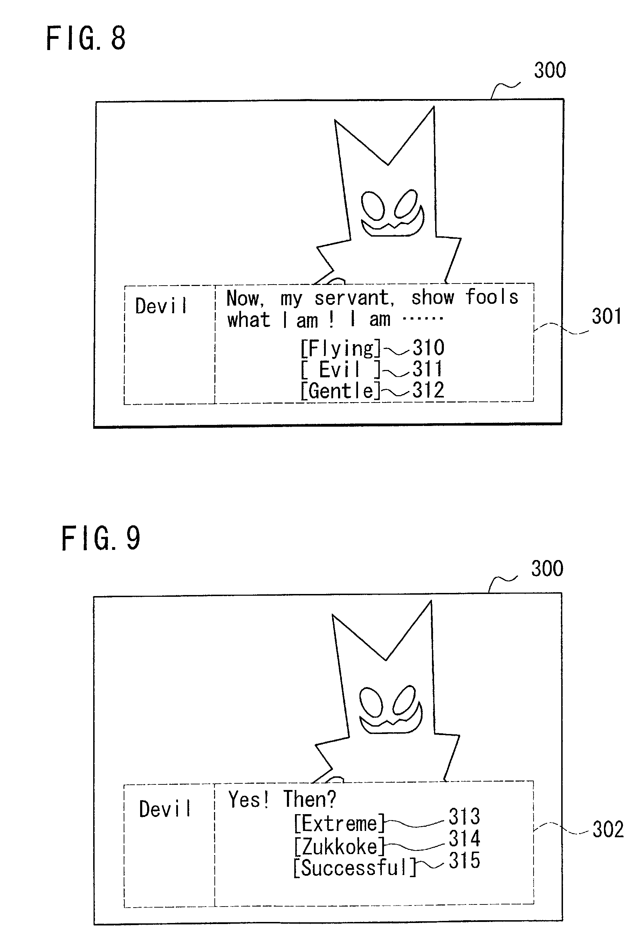

When the game progress control program 342 shifts to the process in step S31, the game progress control program 342 gives the process to the problem and alternatives management program 348. At this time, the problem and alternatives management program 348 uses the data of the problem and alternatives table 363 of the above data sections 360 to display an image including problems (questions) and their alternatives as shown in FIGS. 8 to 12 (to be described later) as an image 300 displayed on the screen 11 through the video control program 345.

When the image 300 of the problem and alternatives thereof is displayed, the problem and alternatives management program 348 determines as step S32 whether any alternative is selected or not by operating predetermined buttons (for example, the "up", "down", "left", and "right" direction keys and the "○" button in the embodiment) of the controller 20 through the controller management program 344. When the selection is not made in step 332, the process of the problem and alternatives management program 348 returns to step S31. When the selection is made, the problem and alternatives management program 348 shifts to the process in step S33.

When the problem and alternatives management program 348 shifts to the process in step S33, the problem and alternatives management program 348 reads out reaction information corresponding to the selection performed in step S32 from the problem and alternatives table 363 of the data sections 360. The information is used as a motion of the shadow character corresponding to the selection.

Thereafter, the problem and alternatives management program 348 shifts to the process in step S34, the problem and alternatives management program 348 determines whether there is no problem or not. When it is determined that there is no problem, the problem and alternatives management program 348 is returned. When it is determined that there is a problem, the problem and alternatives management program 348 returns to the process in step S31 to display the next problem and alternatives thereof.

FIGs. 8 to 12 show concrete examples of the images 300, problems (questions), and alternatives thereof which are displayed on the screen 11 in step S31 of FIG. 7. FIGs. 8 to 12 show concrete examples of problems and alternatives thereof in a video game in which a hero is possessed by a "devil" who is a shadow character, the player selects what is the player himself (devil) , and the shadow character (devil) reacts depending on the selection result.

In the example in FIG. 8, as a problem (question) made by the "devil" serving as the shadow character who is a questioner, a problem sentence, for example, "Now, my servant, show fools what I am! I ..." is displayed in a problem and alternatives display region 301 on the image 300. In addition, as candidates of the answer to the problem, three alternatives 310, 311, and 312, for example, "flying", "evil", and "gentle" are displayed. However, in the video game of the embodiment, not only the three alternatives described above, but also information of many alternatives are prepared in the problem and alternatives table 363 of the data sections 360. The problem and alternatives management program 348 performs such control that three alternatives including a true answer are generated from the many alternatives and displayed depending on a progress state or the like of the game. In the example in FIG. 8, it is assumed that the true answer is the "evil" of the alternative 311.

When one of the alternatives is selected by the operation of, for example, the controller 20 in a state in which the problem and alternatives display region 301 for the three alternatives 310, 311, and 312 are displayed, the problem and alternatives management program 348 extracts a new problem and alternatives thereof from the problem and alternatives table 363. FIG. 9 shows an example of the new problem and alternative thereof. In the example shown in FIG. 9, as a problem (question) made by a "devil" who is a questioner, a problem sentence, for example, "Yes! then?" is displayed in a problem and alternatives display region 302 on the image 300. In addition, as candidates of the answer to the problem, three alternatives 313, 314, and 315, for example, "extreme", "zukkoke", and "successful" are displayed. In the three alternatives, as in the example in FIG. 8, three alternatives including one true answer are selected from many alternatives and displayed. In the example shown in FIG. 9, it is assumed that the true answer is "extreme" of the alternative 313.

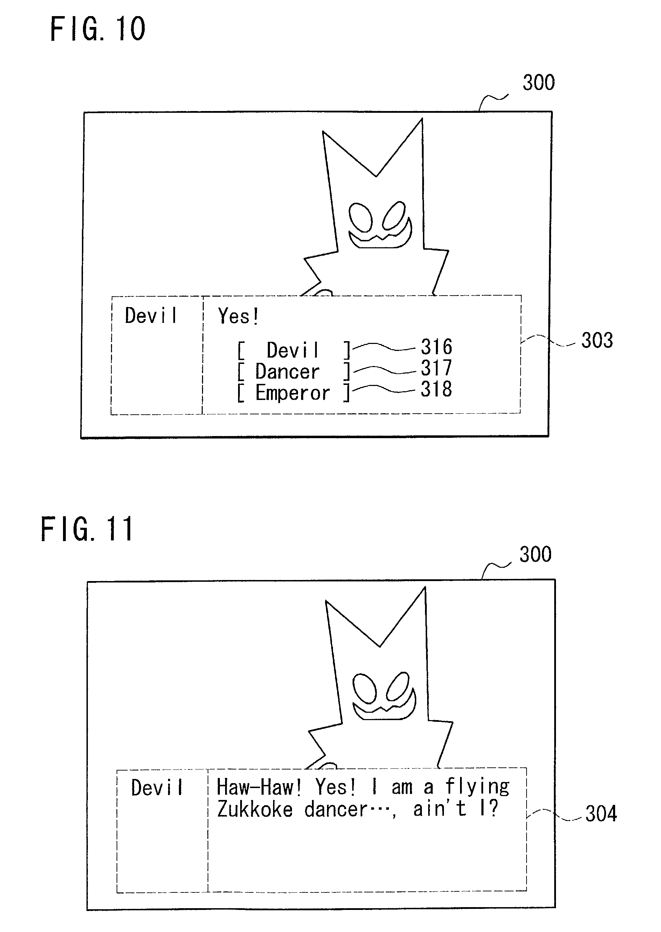

When one of the alternatives is selected in a state in which the problem and alternatives display region 301 for the three alternatives 313, 314, and 315 is displayed, the problem and alternatives management program 348 extracts a new problem and alternatives thereof from the problem and alternatives table 363. FIG. 10 shows an example of the new problem and alternative thereof. As a problem made by a "devil" who is a questioner, a sentence, for example, "Yes ! " which urges the player to make the next selection is displayed in a problem and alternatives display region 303 on the image 300. In addition, as candidates of the answer to the problem, three alternatives 316, 317, and 318, for example, "devil", "dancer", and "emperor" are displayed. In the three alternatives, as in the examples in FIGs. 8 and 9, three alternatives including one true answer are selected from many alternatives and displayed. In the example shown in FIG. 10, it is assumed that the true answer is "devil" of the alternative 316.

Thereafter, when the selection for the problems in FIGs. 8 to 10 is completed, the problem and alternatives management program 348 extracts a reaction sentence corresponding to the selection result of these alternatives from the problem and alternatives table 363 of the data sections 360. The reaction sentence is displayed on the screen to cause the shadow character to perform a reaction corresponding to the selection result.

FIG. 11 shows an example of a response of the shadow character (devil) displayed in a response display region 304 when the "flying" of the alternative 310 is selected for the problem in FIG. 8, when the "zukkoke" of the alternative 314 is selected for the problem in FIG. 9, and when the "dancer" of the alternative 317 is selected for the problem in FIG. 10. More specifically, in the example in FIG. 11, as a reaction of the shadow character, a reaction sentence, for example, "haw-haw! Yes! I am a flying zukkoke dancer ..., ain't I?" is displayed.

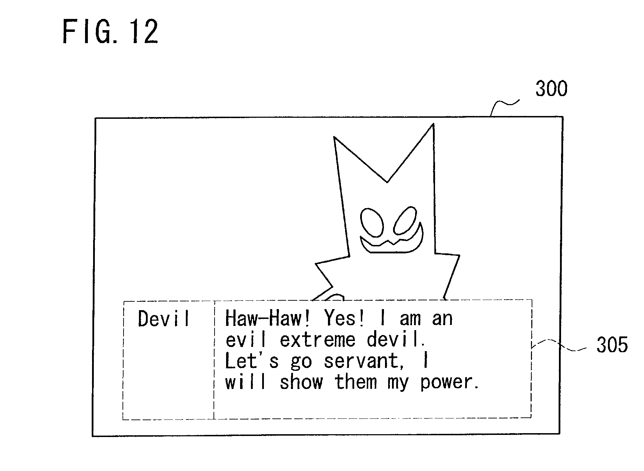

On the other hand, FIG. 12 shows an example of a response of a shadow character (devil) displayed in a reactiondisplay region 305 when the "evil" of the alternative 311 is selected for the problem in FIG. 8, when the "extreme" of the alternative 313 is selected for the problem in FIG. 9, and when the "devil" of the alternative 316 is selected for the problem in FIG. 10. More specifically, in the example in FIG. 12, as a reaction of the shadow character, a reaction sentence, for example, "haw-haw! yes! I am an evil extreme devil. Let's go servant, I will show them my power." is displayed.

In the embodiment, when the alternatives are erroneously selected as in the example shown in FIG. 11, or when the alternatives are truly selected as in the example shown in FIG. 12, the reaction and motion of the shadow character in the subsequent progress of the game may be changed. For this reason, the alternatives to be selected in the respective problems are changed, the action and motion made by the shadow character variably change, and the game having unexpectedness can be realized. In contrast to this, when the alternatives are appropriately selected, the progress of the game can also be realized to make it easy to guide the action of the shadow character in a direction intended by the player (hero).

In the game application program of the embodiment, the shape of the shadow character is changed by items equipped for the hero, and a flag is designed to be turned on when the shadow character has the shape of a predetermined shadow. An event occurring when the flag is turned on may be set.

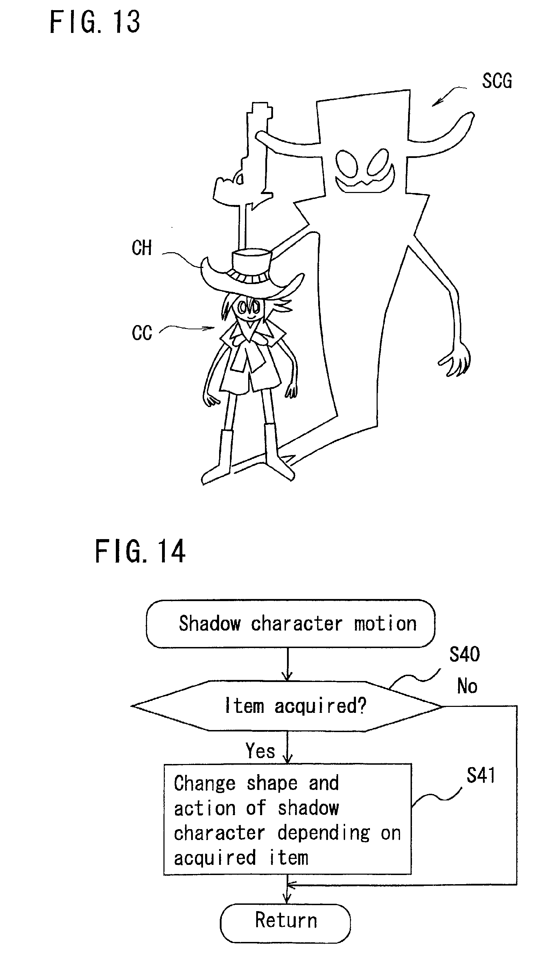

In other words, in the game application program of the embodiment, depending on the items equipped for, for example, the hero, the shape of the shadow character is changed, and the action and motion of the shadow character can also be appropriately changed depending on the change of the shape. For example, in a fighting scene set in the progress of the game, when the hero has, for example, an umbrella existing in a town, the flag is turned on depending on the shape of the umbrella. Such an event that the shadow character has arms to fight against an enemy with a sword can be executed. In FIG. 13, as another example, when the hero CC wears a hat CH, the flag is turned on depending on the shape. The shadow character is transformed into a shadow character SCG of, for example, "gunman type". Furthermore, the shadow character SCG shifts to an event in which the shadow character SCG can use a gun.

As an application of the shadow character depending on the items equipped for the hero, for example, a puzzle game or the like using a silhouette can be realized. More specifically, for example, a game in which only the shadow character is displayed to estimate items equipped for a hero on the basis of the shape of the shadow character can be realized.

FIG. 14 shows, as a concrete example of a shadow character moving process in step S6 in FIG. 4, the flow of the process of displaying a shadow character and the process of event occurrence depending on an item equipped for the hero.

In FIG. 14, after the shadow character is drawn, as step S40, the game progress control program 342 determines whether the hero equips (acquires) some items by the progress of the game, and the game progress control program 342 shifts to step S41 only when the item can acquire the item.

When the game progress control program 342 shifts to step S41, the game progress control program 342 changes the action or the like of the shadow character when the shape of the shadow character is changed depending on the item acquired by the hero and when a flag is turned on.

In the game application program of the embodiment, not only a change in shape of the shadow character by an item equipped for the hero described above and event occurrence caused by the flag, but also a parameter (for example, a level) of the shadow character can be changed depending on a parameter such as the level of the hero or the number of points.

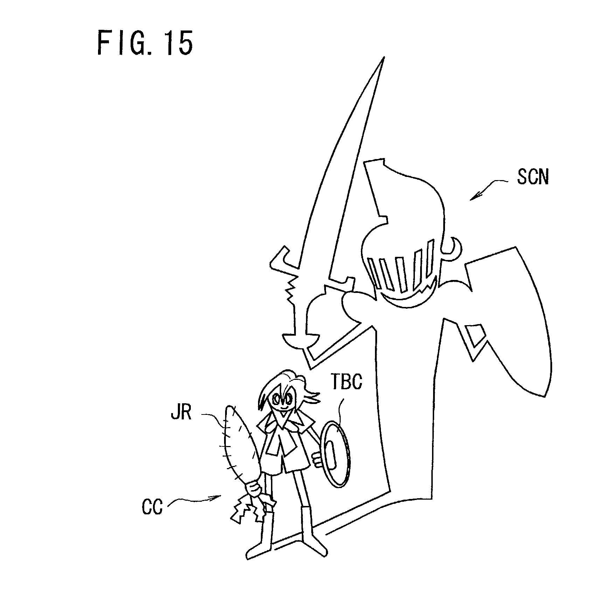

In other words, in the game application program of the embodiment, for example, when the parameter of the hero decreases or slightly increases, the parameter of the shadow character is increased or considerably increased. In contrast to this, the parameter of the hero increases or considerably increases, the parameter of the shadow character can decrease or slightly increase. For example, in a fighting scene set by the progress of the game, when the level of the hero decreases, the shadow character stands up to fight against an enemy in place of the hero or gives an advantageous advice. In addition, for example, in the fighting scene set by the progress of the game, as shown in FIG. 15, when the hero CC equips a radish JR and a lid TBC of a garbage can as items, the shadow character is transformed into a shadow character SCN of "knight type" having a sword and shield. More specifically, equipping the radish JR or the lid TBC which is slightly useful in a fighting scene means that the parameter of the hero decreases. On the other hand, equipping the sword and the shield means that the parameter of the shadow character increases.

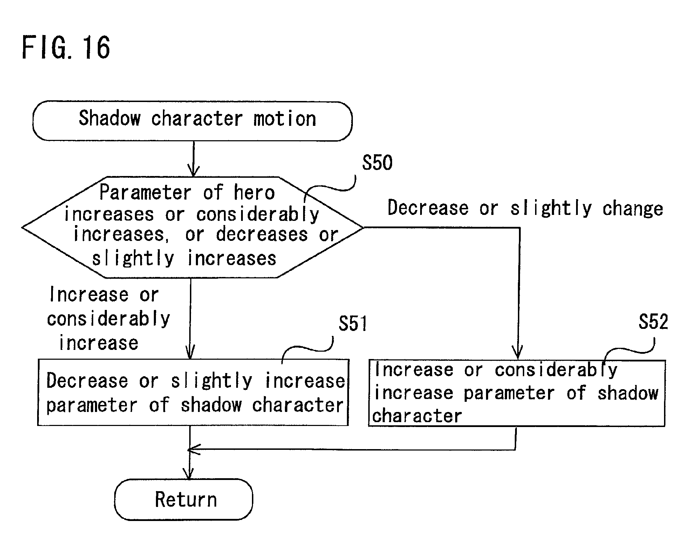

FIG. 16 shows, as a concrete example of the shadow character moving process in step S6 in FIG. 4, the process of a parameter change process of the shadow character depending on the parameter of the hero.

In FIG. 16, after the shadow character is drawn, as step S50, the game progress control program 342 determines whether the parameter of the hero increases or considerably increases by the progress of the game or the like or not or whether the parameter decreases or slightly increases or not. When the parameter of the hero increases or considerably increases, the game progress control program 342 shifts to the process in step S51. On the other hand, when the parameter of the hero decreases or slightly increases, the game progress control program 342 shifts to the process in step S52.

When the game progress control program 342 shifts to the process in step S51, the game progress control program 342 decreases or slightly increases the parameter of the shadow character. On the other hand, the game progress control program 342 shifts to the process in step S52, the game progress control program 342 increases or considerably increases the parameter of the shadow character.

### Summary of the Embodiment

As has been described above, according to the embodiment of the present invention, the shadow of the hero can be self-motivatedly moved independently of a virtual light source or the hero to allow the shadow of the hero to independently act or have independent intent. In this manner, embodiments of the present invention realize a video game having unexpectedness which is supposed to be impossible in a conventional expressing method of a 3D graphic animation, joyfulness, and wide game properties (good entertainment properties).

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

For example, the number of shadow characters is not limited to one for one hero, and a plurality of shadow characters exist for one hero, or one shadow character may divided into a plurality of shadow characters. These shadow characters can talk to each other, fight with each other, or help each other.

The shadow character in the example in FIG. 5, FIG. 13, or FIG. 15 is always in contact with a part (legs in FIGs. 5, 13, or 15) of the body of the hero. However, like a shadow formed when a person jumps, the shadow character can be separated from a part of the body of the hero.

The embodiment exemplifies the case in which the shadow character always exists near the hero. However, like a shadow which further extends by light from a light source at a lower position, the shadow character can be stood at a position distant from the hero.

Furthermore, in the embodiment, the color of the shadow character is semi-transparent black. However, the shadow character may have another color or a plurality of colors, or may have a color which is changed depending on the temper or emotion of the shadow character.

Furthermore, in the embodiment, although the shadow character exists as a planar character, the shadow character may be three-dimensional.

## Claims

1. An object control method comprising the steps of:
generating a second object symbolizing a shadow of a first object in a virtual space; and
controlling the second object independently of the first object and a virtual light source.

2. The object control method according to claim 1, further comprising the step of:
controlling at least one of a shape and a motion of the second object independently of at least one of a shape and a motion of the first object.

3. The object control method according to claim 1, further comprising the step of:
when a third object is added to the first object, adding a fourth object having a shape similar to the shape of the third object and being different from the third object, to the second object.

4. The object control method according to claim 3, further comprising the step of:
changing the shape of the second object with the addition of the fourth object.

5. The object control method according to claim 3, further comprising the step of:
when the shape obtained by adding the third object to the first object is similar to or equal to a predetermined shape, turning on a predetermined flag to set an event occurring when the flag is turned on.

6. The object control method according to claim 1, further comprising the step of:
changing a parameter related to the second object depending on a parameter related to the first object.

7. The object control method according to claim 1, further comprising the step of:
deciding whether the second object is generated or not depending on a circumferential environment condition of the first object.

8. The object control method according to claim 1, further comprising the step of:
generating the second object at a predetermined timing.

9. The object control method according to claim 1, further comprising the step of:
generating the second object depending on a predetermined definitive instruction.

10. The object control method according to claim 1, further comprising the step of:
controlling at least one of the shape and the motion of the second object depending on a predetermined definitive instruction or an indirect instruction.

11. The object control method according to claim 1, further comprising the step of:
generating a predetermined message with generation of the second object.

12. The object control method according to claim 1, further comprising the step of:
self-motivatedly moving the second object.

13. The object control method according to claim 1, further comprising the step of:
generating the first and second objects as personalized virtual characters in a three-dimensional virtual space.

14. A recording medium on which an object control process program to be executed by a computer is recorded, wherein the object control process program comprising the steps of:
generating a second object symbolizing a shadow of a first object in a virtual space; and
controlling the second object independently of the first object and a virtual light source.

15. The recording medium on which an object control process program to be executed by a computer is recorded according to claim 14, the object control process program further comprising the step of:
controlling at least one of a shape and a motion of the second object independently of at least one of a shape and a motion of the first object.

16. The recording medium on which an object control process program to be executed by a computer is recorded according to claim 14, the object control process program further comprising the step of:
when a third object is added to the first object, adding a fourth object having a shape similar to the shape of the third object and being different from the third object, to the second object.

17. The recording medium on which an object control process program to be executed by a computer is recorded according to claim 16, the object control process program further comprising the step of:
changing the shape of the second object with the addition of the fourth object.

18. The recording medium on which an object control process program to be executed by a computer is recorded according to claim 16, the object control process program further comprising the step of:
when the shape obtained by adding the third object to the first object is similar to or equal to a predetermined shape, turning on a predetermined flag to set an event occurring when the flag is turned on.

19. The recording medium on which an object control process program to be executed by a computer is recorded according to claim 14, the object control process program further comprising the step of:
changing a parameter related to the second object depending on a parameter related to the first object.

20. The recording medium on which an object control process program to be executed by a computer is recorded according to claim 14, the object control process program further comprising the step of:
deciding whether the second object is generated or not depending on a circumferential environment condition of the first object.

21. The recording medium on which an object control process program to be executed by a computer is recorded according to claim 14, the object control process program further comprising the step of:
generating the second object at a predetermined timing.

22. The recording medium on which an object control process program to be executed by a computer is recorded according to claim 14, the object control process program further comprising the step of:
generating the second object depending on a predetermined definitive instruction.

23. The recording medium on which an object control process program to be executed by a computer is recorded according to claim 14, the object control process program further comprising the step of:
controlling at least one of the shape and the motion of the second object depending on a predetermined definitive instruction or an indirect instruction.

24. The recording medium on which an object control process program to be executed by a computer is recorded according to claim 14, the object control process program further comprising the step of:
generating a predetermined message with generation of the second object.

25. The recording medium on which an object control process program to be executed by a computer is recorded according to claim 14, the object control process program further comprising the step of:
self-motivatedly moving the second object.

26. The recording medium on which an object control process program to be executed by a computer is recorded according to claim 14, the object control process program further comprising the step of:
generating the first and second objects as personalized virtual characters in a three-dimensional virtual space.

27. A program execution device for executing an object control process program, the object control process program comprising the steps of:
generating a second object symbolizing a shadow of a first object in a virtual space; and
controlling the second object independently of the first object and a virtual light source.

28. The program execution device for executing an object control process program according to claim 27, the object control process program further comprising the step of:
controlling at least one of a shape and a motion of the second object independently of at least one of a shape and a motion of the first object.

29. The program execution device for executing an object control process program according to claim 27, the object control process program further comprising the step of:
when a third object is added to the first object, adding a fourth object having a shape similar to the shape of the third object and being different from the third object, to the second object.

30. The program execution device for executing an object control process program according to claim 29, the object control process program further comprising the step of:
changing the shape of the second object with the addition of the fourth object.

31. The program execution device for executing an object control process program according to claim 29, the object control process program further comprising the step of:
when the shape obtained by adding the third object to the first object is similar to or equal to a predetermined shape, turning on a predetermined flag to set an event occurring when the flag is turned on.

32. The program execution device for executing an object control process program according to claim 27, the object control process program further comprising the step of:
changing a parameter related to the second object depending on a parameter related to the first object.

33. The program execution device for executing an object control process program according to claim 27, the object control process program further comprising the step of:
deciding whether the second object is generated or not depending on a circumferential environment condition of the first object.

34. The program execution device for executing an object control process program according to claim 27, the object control process program further comprising the step of:
generating the second object at a predetermined timing.

35. The program execution device for executing an object control process program according to claim 27, the object control process program further comprising the step of:
generating the second object depending on a predetermined definitive instruction.

36. The program execution device for executing an object control process program according to claim 27, the object control process program further comprising the step of:
controlling at least one of the shape and the motion of the second object depending on a predetermined definitive instruction or an indirect instruction.

37. The program execution device for executing an object control process program according to claim 27, the object control process program further comprising the step of:
generating a predetermined message with generation of the second object.

38. The program execution device for executing an object control process program according to claim 27, the object control process program further comprising the step of:
self-motivatedly moving the second object.

39. The program execution device for executing an object control process program according to claim 27, the object control process program further comprising the step of:
generating the first and second objects as personalized virtual characters in a three-dimensional virtual space.

40. An object control process program to be executed by a computer, comprising the steps of:
generating a second object symbolizing a shadow of a first object in a virtual space; and
controlling the second object independently of the first object and a virtual light source.
